(19) Europäisches Patentamt
European Patent Office
Office européen des brevets

(11) **EP 2 890 179 B1**

(12) **EUROPEAN PATENT SPECIFICATION**

(45) Date of publication and mention
of the grant of the patent:
**28.08.2019 Bulletin 2019/35**

(51) Int Cl.:
*H04W 28/02* (2009.01)    *H04L 12/893* (2013.01)

(21) Application number: **13199624.1**

(22) Date of filing: **27.12.2013**

(54) **METHOD, APPARATUS AND COMPUTER PROGRAM FOR DATA TRANSFER**

VERFAHREN, VORRICHTUNG UND COMPUTERPROGRAMM ZUR DATENÜBERTRAGUNG

PROCÉDÉ, APPAREIL ET PROGRAMME INFORMATIQUE POUR LE TRANSFERT DE DONNÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**01.07.2015 Bulletin 2015/27**

(73) Proprietor: **Nokia Solutions and Networks Oy
02610 Espoo (FI)**

(72) Inventors:
• **Szilagyi, Peter
4028 Debrecen (HU)**
• **Vulkan, Csaba
1119 Budapest (HU)**

(74) Representative: **Nokia EPO representatives
Nokia Technologies Oy
Karaportti 3
02610 Espoo (FI)**

(56) References cited:
**WO-A2-02/19654**    **US-A1- 2013 194 952**

• **VANGALA S ET AL: "The TCP SACK-aware snoop
protocol for TCP over wireless networks",
VEHICULAR TECHNOLOGY CONFERENCE,
2003. VTC 2003-FALL. 2003 IEEE 58TH
ORLANDO, FL, USA 6-9 OCT. 2003; [IEEE
VEHICULAR TECHNOLGY CONFERENCE],
PISCATAWAY, NJ, USA,IEEE, US, vol. 4, 6
October 2003 (2003-10-06), pages 2624-2628,
XP010701388, DOI:
10.1109/VETECF.2003.1286032 ISBN:
978-0-7803-7954-1**

**Description**

The present disclosure relates to a method and apparatus for data transfer, and more particularly but not exclusively to the monitoring and control of data transfer of asymmetric links.

A communication system can be seen as a facility that enables communication sessions between two or more nodes such as fixed or mobile devices, machine-type terminals, access nodes such as base stations, servers and so on. A communication system and compatible communicating entities typically operate in accordance with a given standard or specification which sets out what the various entities associated with the system are permitted to do and how that should be achieved. For example, the standards, specifications and related protocols can define the manner how devices shall communicate, how various aspects of communications shall be implemented and how devices for use in the system shall be configured.

A user can access the communication system by means of an appropriate communication device. A communication device of a user is often referred to as user equipment (UE) or terminal. A communication device is provided with an appropriate signal receiving and transmitting arrangement for enabling communications with other parties. Typically a device such as a user equipment is used for enabling receiving and transmission of communications such as speech and content data.

The Transmission Control Protocol is a transport layer protocol used for data transfer (e.g., downloading content from the internet) in today's computer and telecommunications networks. The TCP is usually operated over the Internet Protocol (IP) network layer, commonly referred to as the TCP/IP protocol stack. International patent publication no. WO 02/19654 relates to a method for improving TCP performance over wireless links. US patent publication no. US 2013/0194952 relates to an apparatus and method for identifying TCP packet loss. VANGALA S ET AL: "The TCP SACK-aware snoop protocol for TCP over wireless networks", VEHICULAR TECHNOLOGY CONFERENCE, 2003. vol. 4, 6 October 2003 (2003-10-06), pages 2624-2628 relates to the Snoop protocol, a link layer retransmission strategy.

According to an aspect, there is provided a method comprising: determining that data throughput degradation is present in one of the uplink and downlink directions, and congestion is present in the other of the uplink and downlink directions, the uplink and downlink directions having different capacities; and reducing data throughput in the other of the uplink and downlink directions upon detecting throughput degradation and congestion.

The method may comprise measuring data flow in the uplink and downlink directions.

The data flow may comprise data segments, and the method may further comprise measuring acknowledgment of data segments.

The data may be transferred using the Transmission Control Protocol.

Reducing data throughput may comprise decreasing an advertised window.

Reducing data throughput may comprise controlling a rate of acknowledgements in the non-congested direction.

Reducing data throughput may comprise controlling a rate data segments in the congested direction.

The determining that throughput degradation is present may comprise calculating a ratio of the downlink and uplink throughput data.

Determining that throughput degradation is present may comprise comparing the calculated ratio to a target ratio.

The target ratio may be dependent on the capacity in uplink and downlink.

The capacity may be preconfigured.

The capacity may be based on detecting capacity of previous throughput measurements.

The link may be an asymmetric air interface link.

The link may be an asymmetric transport link.

According to another aspect, there is provided an apparatus, said apparatus comprising at least one processor and at least one memory including computer code for one or more programs, the at least one memory and the computer code configured, with the at least one processor, to cause the apparatus at least to: determine that data throughput degradation is present in one of the uplink and downlink directions, and congestion is present in the other of the uplink and downlink directions, the uplink and downlink directions having different capacities; and reduce data throughput in the other of the uplink and downlink directions upon detecting throughput degradation and congestion.

The at least one memory and the computer code may be configured, with the at least one processor, to measure data flow in the uplink and downlink directions.

The data flow may comprise data segments, and the at least one memory and the computer code may be configured, with the at least one processor, measure acknowledgment of data segments.

The data may be transferred using the Transmission Control Protocol.

The at least one memory and the computer code may be configured, with the at least one processor, to decrease an advertised window.

The at least one memory and the computer code may be configured, with the at least one processor, to control a rate of acknowledgements in the non-congested direction.

The at least one memory and the computer code may be configured, with the at least one processor, to control a rate data segments in the congested direction.

The at least one memory and the computer code may be configured, with the at least one processor, to determine that throughput degradation is present by calculating a ratio of the downlink and uplink throughput data.

The at least one memory and the computer code may be configured, with the at least one processor, to determine that throughput degradation is present by comparing the calculated ratio to a target ratio.

The target ratio may be dependent on the capacity in uplink and downlink.

The capacity may be preconfigured.

The capacity may be based on detecting capacity of previous throughput measurements.

The link may be an asymmetric air interface link.

The link may be an asymmetric transport link.

According to another aspect, there is provided an apparatus comprising: means for determining that data throughput degradation is present in one of the uplink and downlink directions, and congestion is present in the other of the uplink and downlink directions, the uplink and downlink directions having different capacities; and means for reducing data throughput in the other of the uplink and downlink directions upon detecting throughput degradation and congestion.

The apparatus may comprise means for measuring data flow in the uplink and downlink directions.

The data flow may comprise data segments, and the measuring means may measure acknowledgment of data segments.

The data may be transferred using the Transmission Control Protocol.

The means for reducing data throughput may be for decreasing an advertised window.

The means for reducing data throughput may be for controlling a rate of acknowledgements in the non-congested direction.

The means for reducing data throughput may be for controlling a rate data segments in the congested direction.

The determining means may be for calculating a ratio of the downlink and uplink throughput data.

The determining means may be for comparing the calculated ratio to a target ratio.

The target ratio may be dependent on the capacity in uplink and downlink.

The capacity may be preconfigured.

The capacity may be based on detecting capacity of previous throughput measurements.

The link may be an asymmetric air interface link.

The link may be an asymmetric transport link.

A computer program comprising program code means adapted to perform the method(s) may also be provided. The computer program may be stored and/or otherwise embodied by means of a carrier medium.

In the above, many different embodiments have been described. It should be appreciated that further embodiments may be provided by the combination of any two or more of the embodiments described above.

Various other aspects and further embodiments are also described in the following detailed description and in the attached claims.

Embodiments will now be described, by way of example only, with reference to the accompanying Figures in which:

The scope of the invention is as outlined in the appended claims

Figure 1 shows a schematic diagram of a communication system comprising a base station and a plurality of communication devices;
Figure 2 shows a schematic diagram, of a mobile communication device;
Figure 3 shows a schematic diagram of a control apparatus;
Figure 4 shows a schematic diagram of a data transfer link;
Figure 5 shows a schematic diagram of an alternative data transfer link;
Figure 6 shows a schematic diagram of an alternative transfer link;
Figure 7 shows a schematic diagram of an asymmetric data transfer connection;
Figure 8 shows a flow control entity comprising functional blocks;
Figure 9 shows a method of operation of the flow control entity;
Figure 10 shows a control mechanism comprising functional blocks
Figure 11 shows an alternative control mechanism comprising functional blocks
Figure 12 shows an alternative control mechanism comprising functional blocks

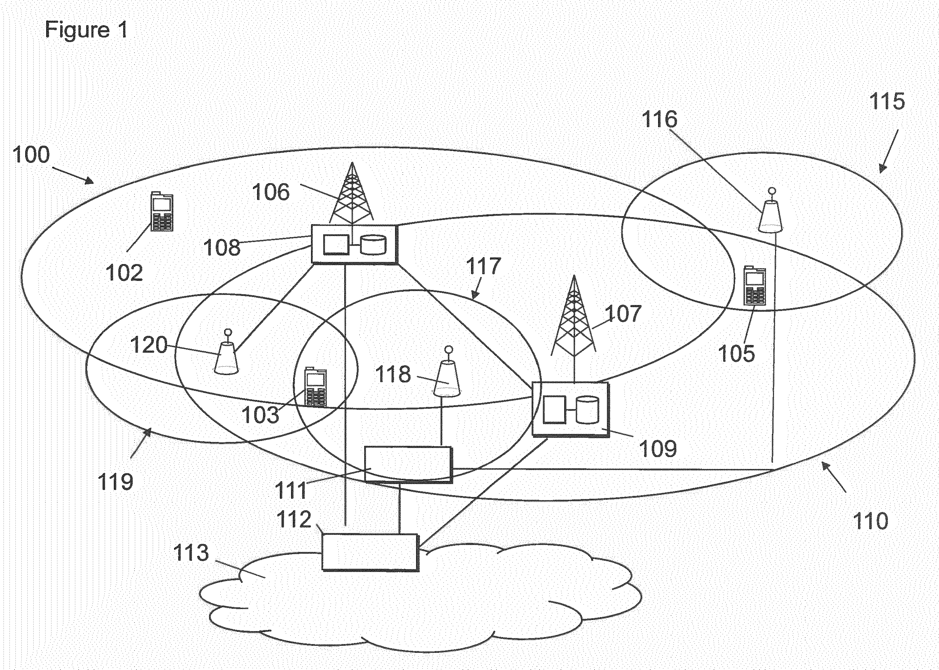

In the following certain exemplifying embodiments are explained with reference to a wireless or mobile communication system serving mobile communication devices. Before explaining in detail the exemplifying embodiments, certain general principles of a wireless communication system and mobile communication devices are briefly explained with reference to Figures 1 to 3 to assist in understanding the technology underlying the described examples.

In a wireless communication system mobile communication devices or user equipment (UE) 102, 103, 105 are provided wireless access via at least one base station or similar wireless transmitting and/or receiving node or point. Base stations are typically controlled by at least one appropriate controller apparatus, so as to enable operation thereof and management of mobile communication devices in communication with the base stations. The controller apparatus may be part of the base station and/or provided by a separate entity such as a Radio Network Controller. In Figure 1 control apparatus 108 and 109 are shown to control the respective macro level base stations 106 and 107. The control apparatus of a base station can be interconnected with other control entities. The control apparatus is typically provided with memory capacity and at least one data processor. The control apparatus and functions may be distributed between a plurality of control units. In some systems, the control apparatus may additionally or alternatively be provided in a radio network controller.

LTE systems may however be considered to have a so-called "flat" architecture, without the provision of RNCs; rather the (e)NB is in communication with a system architecture evolution gateway (SAE-GW) and a mobility management entity (MME), which entities may also be pooled meaning that a plurality of these nodes may serve a plurality (set) of (e)NBs. Each UE is served by only one MME and/or S-GW at a time and the (e)NB keeps track of current association. SAE-GW is a "high-level" user plane core network element in LTE, which may consist of the S-GW and the P-GW (serving gateway and packet data network gateway, respectively). The functionalities of the S-GW and P-GW are separated and they are not required to be co-located.

In Figure 1 base stations 106 and 107 are shown as connected to a wider communications network 113 via gateway 112. A further gateway function may be provided to connect to another network.

The smaller base stations 116, 118 and 120 may also be connected to the network 113, for example by a separate gateway function and/or via the controllers of the macro level stations. In the example, stations 116 and 118 are connected via a gateway 111 whilst station 120 connects via the controller apparatus 108. In some embodiments, the smaller stations may not be provided.

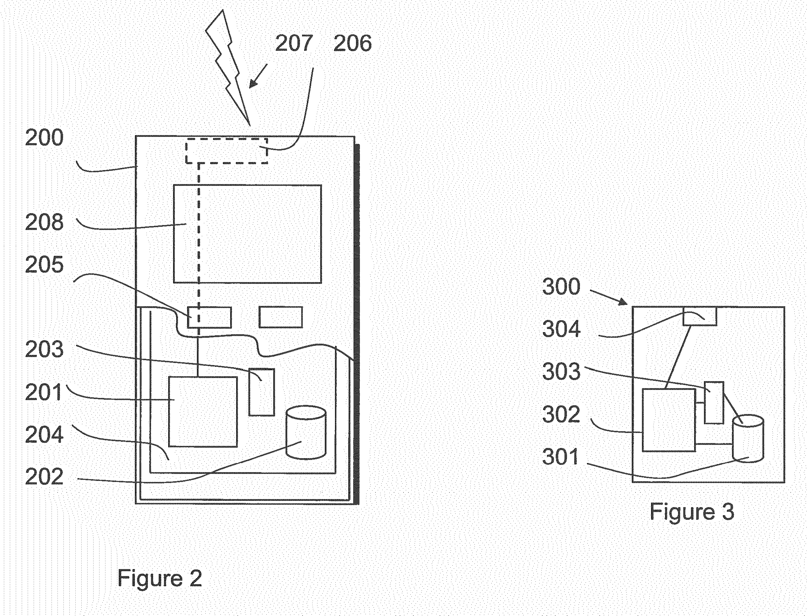

A possible mobile communication device will now be described in more detail with reference to Figure 2 showing a schematic, partially sectioned view of a communication device 102. Such a communication device is often referred to as user equipment (UE) or terminal. An appropriate mobile communication device may be provided by any device capable of sending and receiving radio signals. Non-limiting examples include a mobile station (MS) or mobile device such as a mobile phone or what is known as a 'smart phone', a computer provided with a wireless interface card or other wireless interface facility (e.g., USB dongle), personal data assistant (PDA) or a tablet provided with wireless communication capabilities, or any combinations of these or the like. A mobile communication device may provide, for example, communication of data for carrying communications such as voice, electronic mail (email), text message, multimedia and so on. Users may thus be offered and provided numerous services via their communication devices. Non-limiting examples of these services include two-way or multi-way calls, data communication or multimedia services or simply an access to a data communications network system, such as the Internet. Users may also be provided broadcast or multicast data. Non-limiting examples of the content include downloads, television and radio programs, videos, advertisements, various alerts and other information.

The mobile device 102 may receive signals over an air or radio interface 207 via appropriate apparatus for receiving and may transmit signals via appropriate apparatus for transmitting radio signals. In Figure 2 transceiver apparatus is designated schematically by block 206. The transceiver apparatus 206 may be provided for example by means of a radio part and associated antenna arrangement. The antenna arrangement may be arranged internally or externally to the mobile device.

A mobile device is typically provided with at least one data processing entity 201, at least one memory 202 and other possible components 203 for use in software and hardware aided execution of tasks it is designed to perform, including control of access to and communications with access systems and other communication devices. The data processing, storage and other relevant control apparatus can be provided on an appropriate circuit board and/or in chipsets. This feature is denoted by reference 204. The user may control the operation of the mobile device by means of a suitable user interface such as key pad 205, voice commands, touch sensitive screen or pad, combinations thereof or the like. A display 208, a speaker and a microphone can be also provided. Furthermore, a mobile communication device may comprise appropriate connectors (either wired or wireless) to other devices and/or for connecting external accessories, for example hands-free equipment, thereto.

Figure 3 shows an example of a control apparatus for a communication system, for example to be coupled to and/or for controlling a station of an access system, such as a base station. In some embodiments, base stations comprise a separate control apparatus. In other embodiments, the control apparatus can be another network element such as a radio network controller. In some embodiments, each base station may have such a control apparatus as well as a control apparatus being provided in a radio network controller. The control apparatus 109 can be arranged to provide control on communications in the service area of the system. The control apparatus 109 comprises at least one memory 301, at least one data processing unit 302, 303 and an input/output interface 304. Via the interface the control apparatus can be coupled to a receiver and a transmitter of the base station. For example the control apparatus 109 can be configured to execute an appropriate software code to provide the control functions.

The communication devices 102, 103, 105 may access the communication system based on various access techniques, such as code division multiple access (CDMA), or wideband CDMA (WCDMA). Other non-limiting examples comprise time division multiple access (TDMA), frequency division multiple access (FDMA) and various schemes thereof such as the interleaved frequency division multiple access (IFDMA), single carrier frequency division multiple access (SC-FDMA) and orthogonal frequency division multiple access (OFDMA), space division multiple access (SDMA) and so on.

An example of wireless communication systems are architectures standardized by the 3rd Generation Partnership Project (3GPP). A latest 3GPP based development is often referred to as the long term evolution (LTE) of the Universal Mobile Telecommunications System (UMTS) radio-access technology. The various development stages of the 3GPP specifications are referred to as releases. More recent developments of the LTE are often referred to as LTE Advanced (LTE-A). The LTE employs a mobile architecture known as the Evolved Universal Terrestrial Radio Access Network (E-UTRAN). Base stations of such systems are known as evolved or enhanced Node Bs (eNBs) and provide E-UTRAN features such as user plane Radio Link Control/Medium Access Control/Physical layer protocol (RLC/MAC/PHY) and control plane Radio Resource Control (RRC) protocol terminations towards the communication devices. Other examples of radio access system include those provided by base stations of systems that are based on technologies such as wireless local area network (WLAN) and/or WiMax (Worldwide Interoperability for Microwave Access).

A TCP connection may be routed through multiple intermediate devices such as IP routers, or gateways connected with communication links which may be wireless or fixed. The links may be asymmetric, that is, having different capacity in uplink and downlink where the asymmetry level (the ratio of capacities in uplink and downlink) varies according to the access or transport technology. From the viewpoint of such an intermediate device or link, two-way TCP traffic is present when there is TCP data transfer in both uplink and downlink at generally the same time.

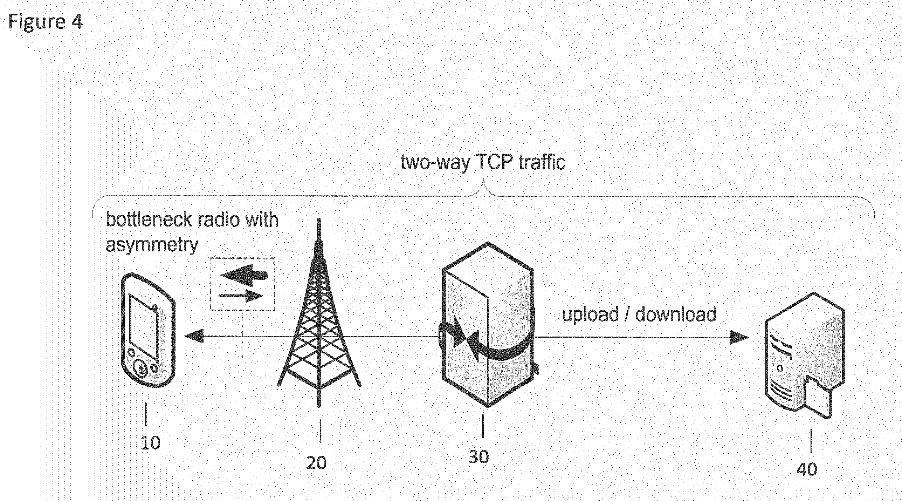

Figure 4 shows an example of a two-way TCP connection in an LTE network. A UE 10 communicates with an eNB 20 over an asymmetric link. The eNB 20 communicates with a content server 40 via the SAE-gateway 30.

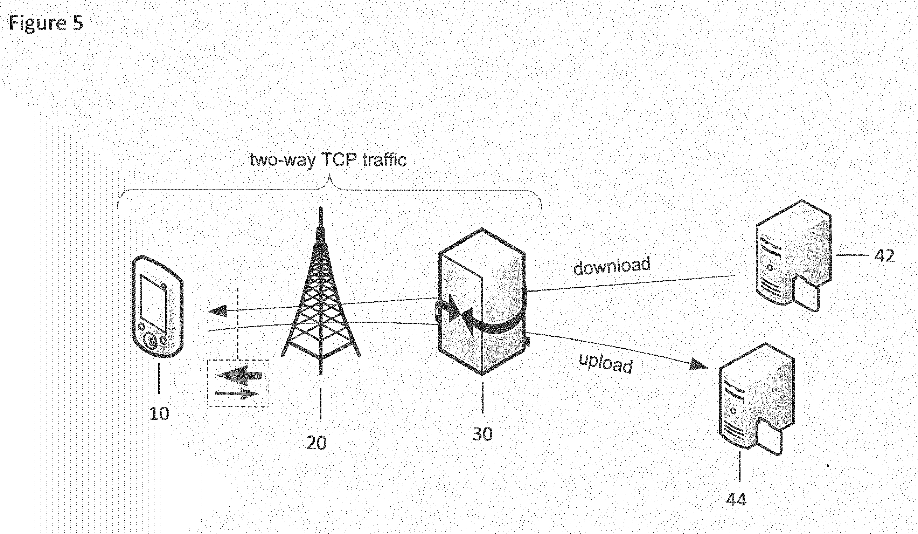

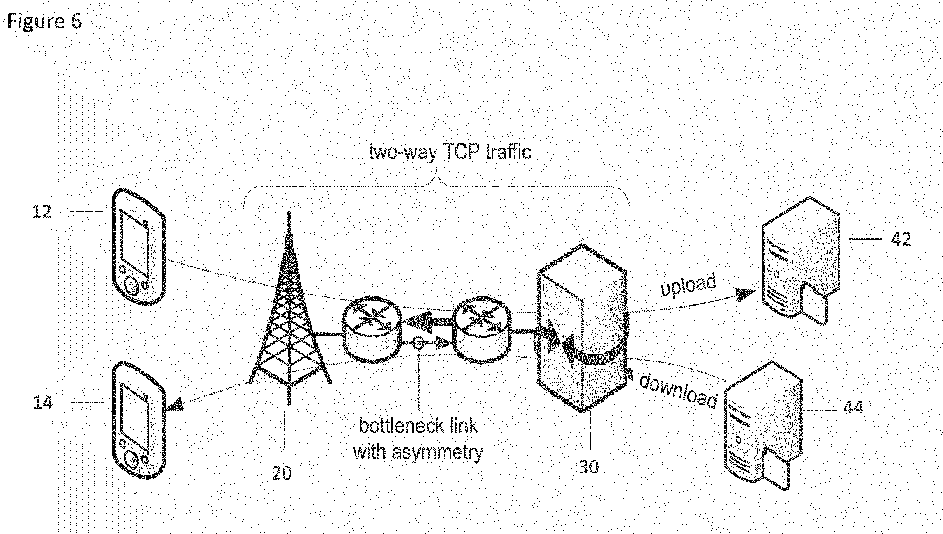

Data sent in the different directions may or may not be in the same TCP connection and may not even correspond to traffic between the same end devices (terminals, servers, etc.). Figure 5 illustrates an example of a two-way TCP connection in which a UE 10 communicates with upload server 42 and download server 44 within separate TCP connections. Figure 6 illustrates two half-duplex TCP connections in which two UEs 12, 14 communicate with upload server 42 and download server 44. In that case, the traffic of the two TCP connections is not multiplexed at the radio interface but at a common asymmetric bottleneck link.

In all cases data transfer is experienced as two-way TCP traffic by an intermediate device, such as eNB 20.

Data transferred over TCP is split into segments where the size of each segment is limited by the Maximum Segment Size (MSS), which should be chosen to avoid segmentation at lower protocol layers. Each data segment sent by the TCP sender has a sequence number corresponding to the first byte of the payload (sequence numbers are expressed in bytes). When a data segment arrives at the TCP receiver, the TCP receiver acknowledges the reception by sending an ACK (acknowledgement) segment, which contains an acknowledgement number that equals the sequence number of the next expected data segment.

The TCP receiver sends ACKs 54 to acknowledge the receipt of a data segment at the TCP receiver. The TCP receiver may implement delayed ACKs 54, in which only every second received TCP segment is acknowledged unless the receiver has an unacknowledged data segment and no new data segment is received within a configured time interval (usually 200 ms). The TCP sender is clocked by the reception of ACKs 54, i.e., the TCP sender sends new data only when it receives an ACK segment. This is referred to as the self-clocking mechanism of the TCP and it gives an opportunity to control the rate of the TCP sender by controlling the rate of the ACKs 54. The maximum amount of data that may be sent out without being acknowledged by the receiver is controlled by the congestion window (cwnd) of the TCP sender. The cwnd roughly gives the amount of data that can be transferred from the sender to the receiver within one Round-Trip Time (RTT).

The TCP receiver can also impose an additional limit on the number of segments that can be in flight (i.e., sent without having been acknowledged). This limit is called the advertised window (AWND). The value of the AWND is sent in the header of every ACK transmitted by the receiver. According to the original TCP standard, the AWND is expressed in bytes and the maximum value of the AWND is 64 KB due to the 16 bit field it occupies in the TCP header.

TCP ACKs 54 are cumulative, meaning that an ACK effectively acknowledges the reception of all data with a sequence number lower than that of the ACK. Therefore, discarding a single ACK has no effect on the TCP sender as the next one cumulatively acknowledges the segment on behalf of the lost ACK as well. Only losing the ACK of the last data segment (or continuous segments) has any impact as in that case there is no following ACK being sent by the receiver that could compensate for the lost one. In that case, the TCP sender will eventually timeout and resend the last segment as the TCP sender cannot be sure whether the data segment itself or the corresponding ACK was lost.

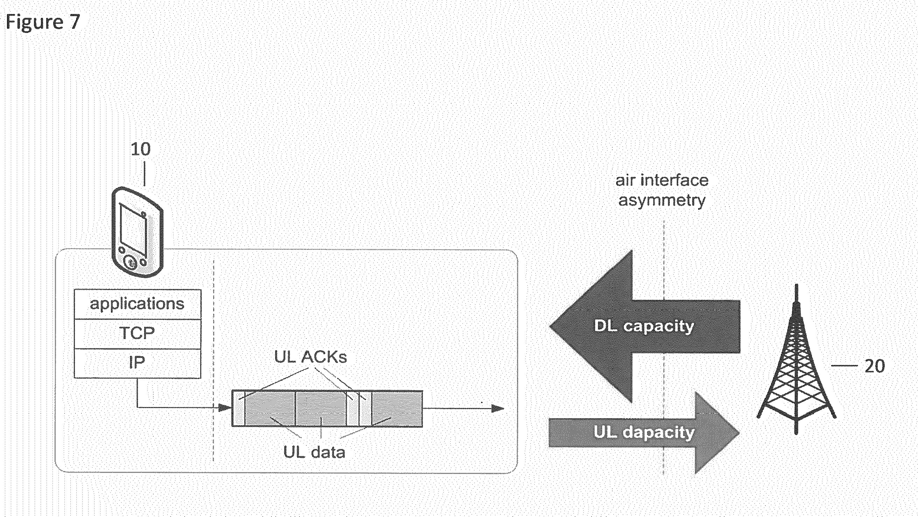

The TCP throughput degrades when two-way TCP connections are sharing asymmetric links. The throughput of the connections in the faster direction (which is usually the downlink direction) is degraded by congestion in the opposite direction because the relatively small uplink ACKs 54 (corresponding to the downlink data) are multiplexed with the larger uplink data segments 52 in the same buffer. Figure 7 illustrates a scenario when an LTE UE 10 connects to an eNB 20 over an asymmetric air interface (i.e. the capacity in DL and UL is unequal due to worse channel conditions and lower available modulation order in the uplink). If there is air interface congestion in the UL, the uplink TCP data 16 and ACK segments 18 are multiplexed in the UE buffers, resulting in unused bandwidth and lower achievable throughput in the downlink despite the higher capacity. This is sometimes referred to as the TCP asymmetry problem.

Some proposals which address this issue involve an additional agent or mechanism to be implemented either directly in the TCP endpoints or in a network element that schedules packets to be transmitted on the congested or slow link, which in UL is the UE itself. However, these mechanisms may not be applicable as a generic solution in mobile networks. In order to handle the asymmetry on the air interface in case of UL congestion, the implementation of the logic is in the device that buffers and schedules packets to the UL link. Since this is the UE itself, the logic is in the UE. A UE based solution would require the support of the vast majority of phone vendors and may take several years to implement. Therefore, some embodiments disclosed herein may provide a solution to the TCP asymmetry problem that is uniform and transparent solution across all UE models, requiring no modification to the UEs. Some embodiments can be implemented in the network side even in case the asymmetric link is the radio interface and there is UL congestion.

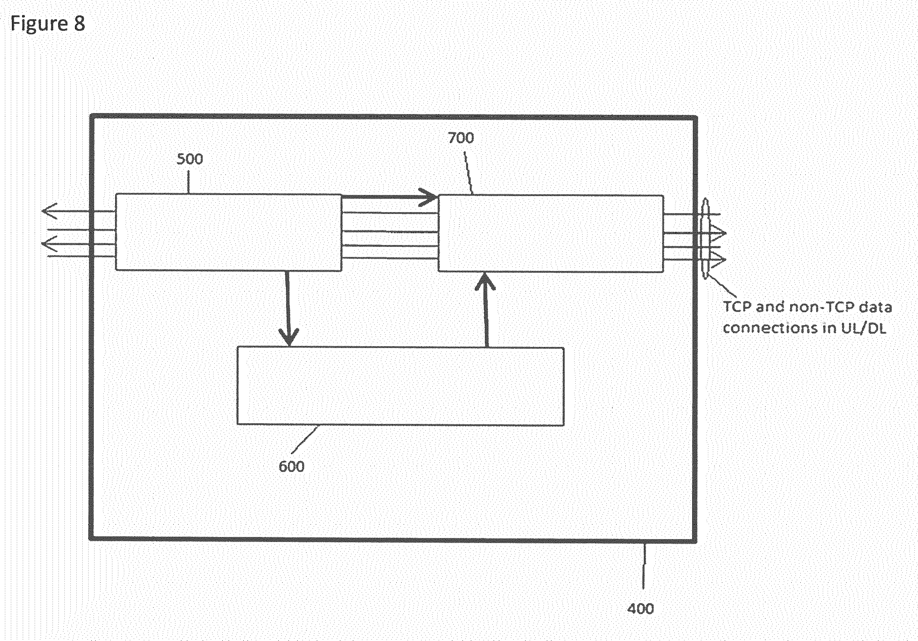

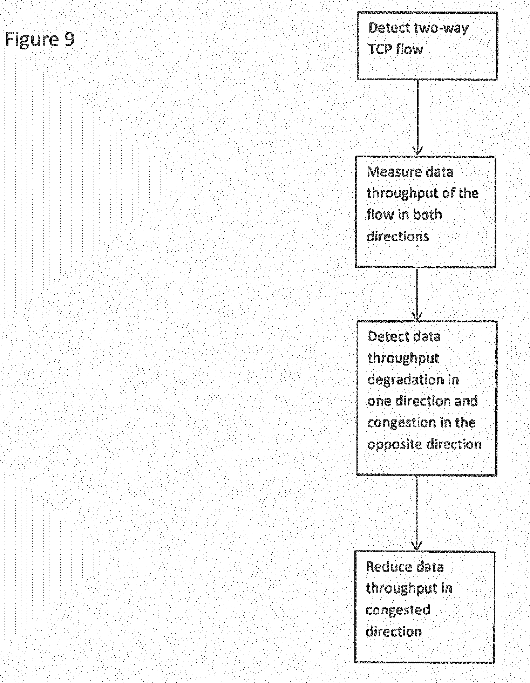

Figure 8 shows a functional block which can be run on, or attached to, a network element located in the proximity of the asymmetrical link and is referred to as the TcpAsym entity. This entity may provide flow control. In the case of air interface asymmetry, this entity may be attached to the eNB, HSPA+ BTS, RNC (the node where the radio Layer2 protocols are terminated in 3G) or any other suitable location. In each case, the TcpAsym is acting as a middle box whose operation is transparent to the communicating end devices. Figure 9 is a flow chart showing the steps carried out by the TcpAsym entity.

The operation of the TcpAsym entity and the alternative control mechanisms will be described in terms of an eNB based implementation that handles air interface asymmetry. The discussed operation and interworking of the three functional blocks are applicable to the other air interface deployment scenarios (in the HSPA+ BTS or RNC) and/or to the deployments handling transport asymmetry (ADSL (asymmetric digital subscriber line) modem, transport router based implementations). In the following, deployment specific implementation details of some embodiments are discussed, mostly concerning the integration of the TcpAsym entity itself in the network element or device in which the TcpAsym operates.

In the following, the suitable locations of the TcpAsym entity (where it can access the unencrypted TCP/IP protocol headers of the user traffic) and the management (creation, deletion) of the entity itself are discussed.

In LTE and HSPA+ networks, suitable locations are the eNB and the HSPA+ BTS, respectively. In WCDMA/HSPA systems, the RNC would be a similarly suitable network element (the eNB/HSPA+ BTS and the RNC terminate the radio protocols and relay user data between the radio and the transport bearers, making the user plane data available). These radio access network elements are close to the air interface and thus they are in a good position to detect if the air interface asymmetry and two-way traffic has created the TCP asymmetry problem.

The TcpAsym entity may manage the connections within a bearer, therefore instances of the TcpAsym entity (referred to as TcpAsym entities) may be created/terminated dynamically as part of the bearer establishment/deactivation procedure. Accordingly, at each eNB (HSPA+ BTS, RNC) there may be as many co-existing TcpAsym entities as the number of active bearers. The TcpAsym entity may be embedded in the eNB's packet processing chain so that the TcpAsym entity can monitor the content of the TCP segments and originate the required control actions to address the asymmetry problem. The TcpAsym entity may interfere with the communication of the end devices in order to manipulate their behavior. The actions of the TcpAsym entity, however, may be transparent to the end devices, that is, they are compatible with the operation of the TCP and have no effect on the state (e.g., slow start, congestion avoidance, etc.) of the TCP senders. The lifetime of the TcpAsym entity may be bound to the radio data bearer and the entity is terminated when the bearer itself is deactivated.

The TcpAsym entity may also be implemented as part of an eNB side TCP proxy, which makes for easier system integration if the proxy itself is already deployed in the network.

The TcpAsym entity may also be implemented in a core network element (such as 3G/HSPA SGSN, LTE SAE-GW, etc.) to handle asymmetric congestion situations occurring at the last mile , i.e. the connection of the radio access node; which may be, for example, Ethernet, microwave or optical, or Mobile Backhaul (MBH) links.

In the case of ADSL modem or transport router based implementation, the TcpAsym entity may be a software entity part of the firmware/OS (operating system) of the device. A single TcpAsym entity may be enough to handle the TCP asymmetry problem on the asymmetrical transport link. Similarly to the eNB based implementation, the TcpAsym entity may be able to actively manipulate the data packets going through the device, that is, traffic flows through the TcpAsym entity.

The TcpAsym entity may comprise three functional blocks, as shown in Figure 8. The three blocks are the measurement component 500 (MC), the evaluation component 600 (EC) and the control mechanism 700 (CoM). The MC 500 is responsible for detecting new TCP flows and providing the relevant measurement data to the EC 600. Based on the measurements of the MC 500 and/or on additional pre-configured or external information (such as the available capacity in DL and UL), the EC 600 detects the asymmetry problem, activates or deactivates the CoM 700 and manages the operation of the CoM 700 during two-way TCP traffic. The CoM 700 executes the required actions based on the instructions received from the EC 600. The MC 500 may be required to measure and provide additional information to the CoM 700 in order to support the operation of the CoM 700; the required information may be dependent on the selected CoM 700 function provided. The CoM 700 adjusts the throughput of the problematic TCP connections.by manipulating the AWND sent by a receiver and/or by controlling the rate of the ACK and/or data segments (i.e. shaping the data flows). As a result, the three alternative control mechanisms do not require modifications in the UE or control server, and are non-intrusive, i.e. they do not discard any data or ACK segments.

These functions may be implemented in a block each as shown in figure 8. Alternatively the functions may be implemented in more than one block or may share blocks. The functions may be implemented on hardware and/or software. For example, the control apparatus as shown in figure 3 may be configured to execute appropriate software to achieve the functions set out below.

The MC 500 may continuously measure the throughput of each active connection, separately in UL and DL. Separate UL and DL measurements may be needed to detect the TCP asymmetry problem indicated by throughput degradation in a non-congested direction. There may be a separate TcpAsym entity per established data bearer that manages every connection within the bearer. The MC 500 may examine each traversing packet to detect the establishment of new TCP connections (identified by the SYN flag set in the TCP header). After a flow is detected, the MC 500 measures the UL and/or DL throughput of the flow and collects statistics on the size of the TCP ACK and data segments.

Additionally, the MC 500 may perform control mechanism specific measurements. The AWND manipulation specific measurements are the capturing of the window scaling factor (announced during the TCP connection establishment in each direction) and the RTT measurements (note that this value is not the same as the end-to-end RTT calculated by the TCP sender itself). The former is used for the manipulation of the AWND value in the ACK headers. The latter enables the estimation of the latency of the control actions, based on which the minimum time spent between two consecutive control actions (AWND recalculations) is defined. The RTT is obtained by measuring the time between (1) the observation of a TCP data segment with a given sequence number S in the TCP header; and (2) an ACK transmitted in the opposite direction (in the same connection) with an acknowledgement number that is higher than S. This measurement is done for both directions, that is, for each bearer, the corresponding TcpAsym entity will maintain an RTT for the loop between the eNB and the UE (measured on flows transmitting data in DL) and for the loop between the eNB and the content server (measured on UL data transmissions). Note that the other two CoM alternatives (i.e., ACK and data shaping) require measurements that are specific to their mechanism, and are discussed separately.

The EC 600 detects the TCP asymmetry problem if there is congestion in one of the UL or DL directions, and the data throughput shows degradation in the other (opposite) direction. If both conditions are met, the EC 600 triggers the CoM.

The first condition ensures that the TcpAsym entity will not initiate control actions if there is no congestion and thus the throughput degradation, if there is any, is due to other reasons. The second condition ensures that there is degradation, i.e. that the congestion is harmful and that the TCP asymmetry problem is present. With this detection, incorrect triggering is avoided in case there is low throughput (e.g., small amount of data to be downloaded and large amount of data to be uploaded) but there is in fact no problem.

Throughput degradation is detected by the EC 600 by comparing the ratio of the UL and DL data throughput to a predefined target throughput ratio (T). This value may be calculated by incorporating the conditions of both efficient air interface resource usage and maximum possible throughput in DL and UL. If the measured target throughput ratio differs significantly from T in either direction, throughput degradation is detected.

The target throughput ratio may be defined based on the air interface capacity available for TCP transmission in DL and UL (denoted by $C_D$ and $C_U$, respectively). The full physical DL/UL capacity can be utilized by TCP traffic. However, it may not be possible to achieve full link utilization with TCP due to architectural limitations (i.e., irrespectively of the TCP asymmetry problem itself). In these cases, the capacity that can be effectively utilized by TCP may be smaller than the physical link capacity. The calculation of T also considers the ratio of the size of a typical TCP ACK segment and a full-sized TCP data segment (denoted by $Q = |ACK| / MSS$). The EC 600 may calculate Q based on the information received from the MC 500, whereas the physical interface capacity information is either pre-configured in the EC 600 or is queried from the Radio Resource Management (RRM) entity of the eNB. Let the $D_D$ and $D_U$ parameters denote the data throughput in DL and UL, respectively, whereas $A_U$ and $A_D$ denote the throughput of the ACK segments generated by the TCP receivers in the opposite directions, UL and DL, respectively. The capacity available for TCP in UL and DL is used up by the data and ACK flows in the corresponding direction:

$$C_U = D_U + A_U \quad (1)$$

$$C_D = D_D + A_D \quad (2)$$

As transmitting a TCP data segment triggers the transmission of an ACK segment in the opposite direction, the ratio of the ACK and data segment size (denoted by Q) also defines the ratio of the ACK and data throughput as $Q = A_U / D_D$ and $Q = A_D / D_U$. Using Q, equation (1) and (2) can be written as

$$C_U = D_U + Q \cdot D_D \quad (1')$$

$$C_D = D_D + Q \cdot D_U \quad (2')$$

Let R denote the level of the capacity asymmetry, i.e., $R = C_D / C_U$ (R = 1 means that the DL and UL capacity available for TCP are the same). Using that $C_D = R \cdot C_U$, the optimal target throughput ratio can be derived from (1') and (2') as:

$$T = D_D / D_U = (R - Q) / (1 - R \cdot Q) \quad (3)$$

In case of multiple TCP flows, the throughput in DL and UL (i.e., $D_D$ and $D_U$) refer to the aggregated throughput of all connections (visible to the TcpAsym entity) sending data in the corresponding direction. The EC 600 detects TCP throughput degradation if the ratio of the measured DL and UL throughput significantly differs from the target ratio given by (3), that is, one of the following conditions is true:

$$D_D / D_U < T - \varepsilon \quad \text{or} \quad D_D / D_U > T + \varepsilon \quad (4)$$

where $\varepsilon$ is an adjustable tolerance interval around T, specifying how accurately the target throughput ratio is enforced. In case the asymmetric link is congested in uplink and $D_D / D_U < T - \varepsilon$ is true, the UL traffic is suppressing the DL traffic and the CoM 700 (AWND manipulation) is triggered to reduce the UL data rate by reducing the AWND in the corresponding DL ACKs 54. If the link is congested in downlink and $D_D / D_U > T + \varepsilon$ is true, the DL traffic suppresses the UL traffic (i.e., the bottleneck is in DL) and the CoM 700 is triggered to reduce the throughput in DL (through reducing the AWND in the corresponding UL ACKs 54).

Note that in one example if the conditions of (4) do not pair up with congestion detected on the asymmetric link in the right direction, the CoM 700 is not triggered.

The definition of the target throughput ratio according to (3) is based on the concept of fully utilizing the DL and UL capacity available for TCP. In most cases, this condition also ensures full physical air interface or link utilization in both directions and thus maximum system efficiency. However, as mentioned above, the physical DL and UL capacity (denoted by $P_D$ and $P_U$, respectively) may not always be filled with TCP traffic, which is a limitation independent from the TCP asymmetry problem. Theoretically, filling the capacity in a given direction with TCP data is possible only if the capacity in the opposite direction is able to carry the corresponding reverse ACK throughput. Let us assume that $P_D > P_U$. A data throughput fully utilizing $P_D$ requires at least $P_U > P_D \cdot Q$ capacity in the opposite direction. However, if $P_U < P_D \cdot Q$, that is, $P_D / P_U > 1/Q$ (the physical air interface is more asymmetrical than the size of the TCP data and ACK segments), the physical downlink capacity cannot be fully utilized by TCP. In case $P_D < P_U$, the condition for being able to fully utilize the physical UL capacity is $Q \cdot P_U > P_D$, that is, $P_D / P_U < Q$.

In summary, reaching the ideal target throughput ratio and simultaneously having full physical DL and UL link utilization may be achieved only within the air interface asymmetry range $1/Q < P_D / P_U < Q$. For all reasonable situations, the value of Q is around $40 / 1500 \approx 0.025$, which means that both the ideal throughput ratio and full physical link utilization can be achieved with up to 40x air interface asymmetry (i.e., 40 times more DL/UL capacity than in the opposite direction), which may cover real world cases where TCP throughput matters. In these cases, $C_D = P_D$ and $C_U = P_U$. Outside of this physical asymmetry range, the DL and UL capacity available for TCP traffic is:

$$C_D = P_U / Q \ (C_D < P_D) \quad \text{and} \quad C_U = P_D / Q \ (C_U < P_U) \quad (5)$$

Air interface congestion is detected by comparing the cell level throughput with the capacity of the air interface in both directions; congestion is indicated if the throughput reaches the capacity. Alternatively, the PRB (physical resource block) utilization of the cell in DL and UL can be checked (from the RRM (radio resource manager)) to detect full UL/DL utilization.

In an eNB based implementation, if the available PRBs are fully utilized (i.e., assigned by the air interface scheduler to active bearers) either in UL or DL, it means that the air interface is congested in the direction of full PRB utilization. If there is available free capacity at the air interface, it means that there is no cell level air interface congestion. However, if the radio channel of a particular UE is poor, the achievable throughput in UL or DL is limited and potentially creates the asymmetry problem within the UE's bearer(s) without having full PRB utilization at the cell level. This is the case when the UE is already assigned the maximum number of PRBs it is eligible to receive according to the air interface scheduling policy and the capabilities of the UE; in that case, the congestion is also detected. An alternative to the air interface congestion detection based on PRB utilization is to compare the cell level UL/DL throughput measurements with the UL/DL capacity. This alternative may also be applicable in case of the HSPA+ BTS or RNC based implementations.

In case of ADSL asymmetry, the UL/DL capacity ratio may be specified by the configuration of the ADSL modem and the same configuration can be provided to the corresponding TcpAsym entity as well. For transport links, a similar pre-configuration of the link capacity is possible; additionally, the TcpAsym entity may interface with the router's management database and autonomously query the link capacity at each device start-up. Besides pre-configuration, the TcpAsym entity in the transport devices may directly measure the total achieved throughput in UL and DL; the historical peak rates may be used as the UL and DL capacity. The measurements may be performed continuously and old measurements may be aged out, automatically following changes in the configuration. In order to detect congestion on the asymmetric link, the TcpAsym entity can simply compare the measured aggregated UL and DL throughput of the flows with the available capacity in the corresponding direction. If the aggregated throughput is below the capacity of the link in both directions, the bottleneck is not at the TcpAsym entity and the CoM 700 is not triggered regardless of the DL/UL throughput ratio.

The CoM 700 may attempt to bring the actual throughput ratio close to T by limiting the data throughput in the congested direction until the measured throughput ratio converges towards T. The CoM 700 reduces the rate of data causing the asymmetry problem via AWND manipulation and/or adaptive shaping.

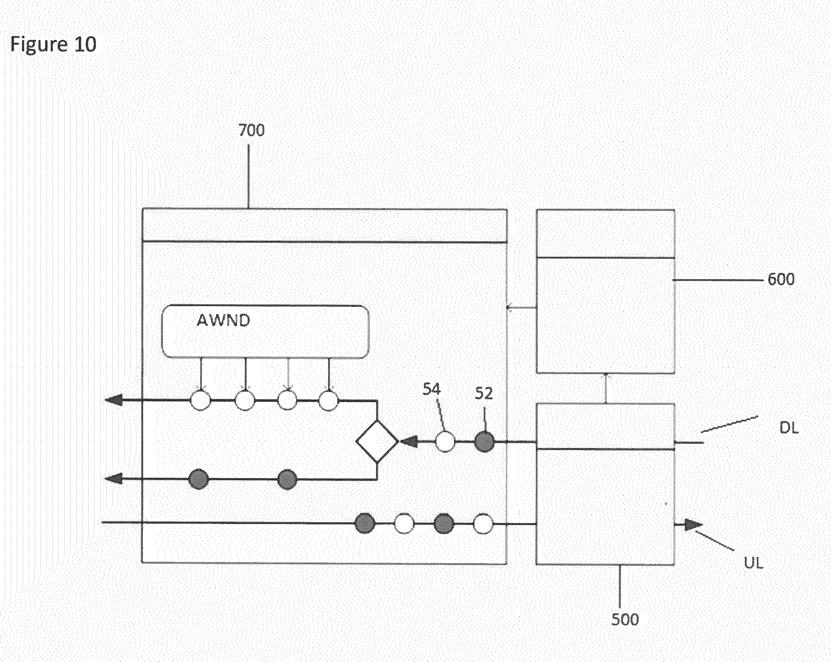

Operation of an AWND based CoM, is shown in figure 10. In this example, the bottleneck link is congested in the UL resulting in throughput degradation in the downlink direction. The mechanism thus reduces the UL throughput. The operation of the CoM 700 may be adapted to those cases when the UL throughput degradation is caused by DL congestion by interchanging the treatment of DL TCP segments with that of the UL TCP segments and vice versa.

The AWND manipulation may limit the amount of data that the TCP sender can transmit within one RTT, thus the effective data throughput of the connection will decrease. Assuming UL air interface congestion, the AWND mechanism may need to reduce the AWND within the DL ACKs 54 in order to signal an artificially limited window size to the UL TCP senders in the UE. The window size may be chosen in a way that the UL TCP senders become advertised window limited, i.e., the signalled AWND is less than the congestion window of the TCP sender of the corresponding connection. Since the congestion window is an internal state of the TCP sender and it may not be inferred by observing data and ACK segments at an intermediate point, the AWND may be manipulated with a multiplicative decrease, additive increase (commonly referred to as AIMD) algorithm with measurement feedback on the impact of the reduced AWND (Figure 10).

The MC 500 triggers the CoM 700 when the TCP asymmetry problem is detected. Upon the trigger, the CoM 700 may initialize the calculated AWND of each UL TCP connection to one half of the Receive Window (RWIN), which is the actual AWND sent by the corresponding UL TCP receiver in each ACK. The CoM 700 may overwrite the RWIN with the calculated AWND in each subsequent DL ACK that is received afterwards in the corresponding connection in case the AWND is smaller than the RWIN in the given ACK. Alternatively to halving the AWND, other multiplicative coefficients (above 0 and less than 1) may be used instead, by which the aggressiveness of the window reduction can be calibrated. The effect of the AWND reduction to the measured throughput may be evaluated after an RTT between the eNB and the UE. If the TCP asymmetry problem (congestion and throughput degradation) is still present, the AWND of each connection may be halved in the next round again. The AWND may be managed on a per-flow basis, clocked by the RTT of the corresponding flow. Alternatively, all flows may be controlled at the same frequency, for example with a reasonably long period (e.g., chosen to be the largest individual RTT).

The RWIN sent by a TCP receiver may indicate a hard limit on the amount of data it is able to store and process; therefore, the CoM 700 may only be allowed to overwrite the RWIN if the AWND is smaller than that. As the AWND is exponentially decreasing during the multiplicative decrease periods, it is likely that the AWND will be lower than the RWIN sent in the ACKs 54; however, in case the receiver suddenly becomes resource limited, the receiver may still send an ACK with a lower RWIN than the calculated one. Since the RWIN may be changed by the TCP receiver at any time, the CoM 700 may compare the calculated AWND with the RWIN (and decide if overwriting is acceptable) independently for each ACK.

The multiplicative decrease of the AWNDs may continue until the TCP asymmetry problem is no longer detected. If that happens, the CoM 700 starts to linearly increase the AWND that is set in the DL ACKs 54 of each flow. The linear increase is implemented by increasing the AWND by a configurable fixed amount (e.g., by 8 MSS) per RTT in each flow. In case the two-way TCP traffic continues, increasing the AWND will at some point result in air interface congestion and the violation of the target throughput again. In that case, the multiplicative decrease part of the CoM 700 is activated again and the per-RTT AWND halving/reduction is triggered for each flow. If the TCP asymmetry problem is no longer present, the linear increase of the AWND still continues instead of restoring the RWIN at once in order to avoid triggering a large burst of data to be sent by the TCP sender. In each flow, the linearly increased calculated AWND eventually becomes greater than the RWIN sent by the corresponding UL TCP receiver and the AWND manipulation is deactivated for that flow. Therefore, each flow is released from the control of the AWND manipulation at a potentially different point, based on how much the AWND was reduced in the flow and what is the RWIN in the flow sent in the DL ACKs 54.

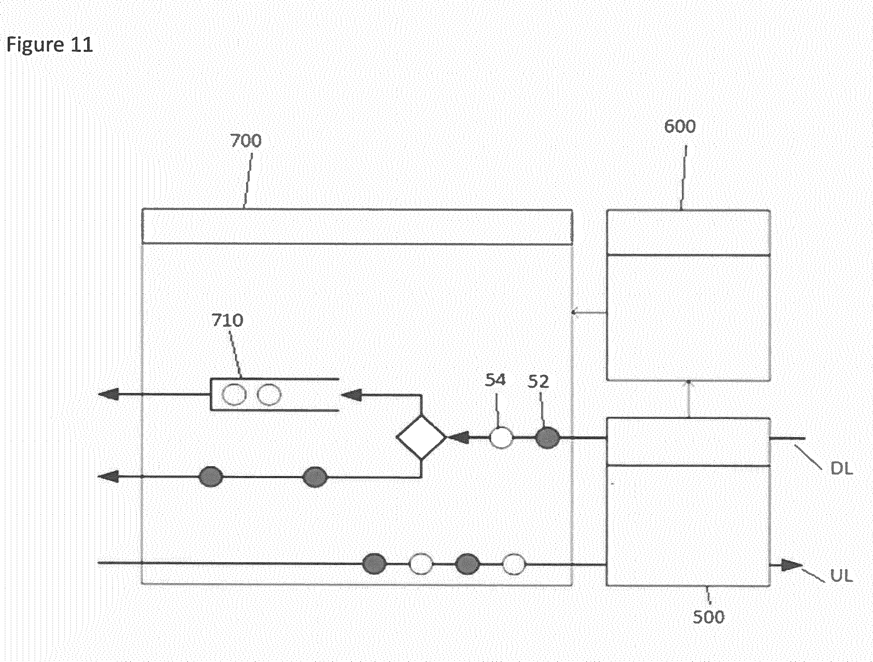

Alternatively, as shown in figure 11, the CoM 700 may aim to reach the target throughput ratio by shaping the ACKS 54 of the flows causing the throughput degradation in the opposite direction.

Shaping can be applied to either the ACK segments or the data segments 52 of a flow and it can enforce a maximum rate of the ACKs 54 or data segments 52, i.e., manipulate the pacing of the TCP connection. Controlling the rate at which the ACKs 54 are received by the TCP sender is an indirect mechanism (exploiting the self-clocking property of the TCP) to limit the data throughput of a flow. Self-clocking refers to the fact that a TCP sender only transmits new data if it receives an ACK, therefore the data sending rate will match the enforced rate of the ACKs 54. Controlling the rate of the data segments 52 is a mechanism that can directly enforce the data throughput.

The CoM 700 is triggered by the EC 600 when the EC 600 detects the TCP asymmetry problem. If the problem is detected by uplink congestion and downlink throughput degradation, the shaper should reduce the UL throughput by shaping the DL ACKs 54. Alternatively, in the case of downlink congestion and uplink throughput degradation the shaper should reduce the DL throughput by shaping UL ACKs 54. By reducing the rate of the ACKs 54 in one direction, the shaper is able to reduce the data throughput in the opposite direction as the pacing of the TCP source is manipulated. The shaper remains active until the congestion disappears or no activity is detected in the opposite direction. Similarly to the AWND mechanism, the operation of the shaper is discussed in case of uplink congestion (shown in Figure 11) as the mechanism can be adapted trivially for the DL congestion case.

The arrangement shown in figure 11 requires a common shaper for the DL ACKs 54 that is shared by two or more or all TCP flows sending UL data (and, consequently, DL ACKs 54), i.e., no per-flow shaper is required. The shaper consists of a first-in first-out buffer 710 to store ACKs 54 that are not yet eligible for transmission. The scheduling of the ACKs 54 (when to de-queue and forward and ACK from the buffer 710) is calculated so that the target throughput (T) is achieved. As T depends on the downlink data rate as well, the shaping of the DL ACKs 54 is adaptively adjusted to the UL data rate. The implementation of the scheduling logic is based on counting either the number of data and ACK segments in DL or the amount of data (in bytes) transmitted in DL and UL.

Let $N_D$ denote the number of DL data segments 52 going through the TcpAsym entity since the TcpAsym entity has detected the TCP asymmetry problem. Similarly, let $N_A$ denote the number of ACK segments transmitted in the DL since the same reference point. The shaper may adapt the rate of the DL ACKs 54 to the current (measured) rate of the DL data segments 52 by enforcing the ratio of $N_D$ and $N_A$ towards the T target throughput ratio. As one TCP data segment generates a corresponding ACK in the opposite direction, controlling the ratio of the DL data segments 52 and DL ACKs 54 directly enforces the ratio of the DL and UL data segments 52, i.e., the ratio of the DL and UL throughput. Note that in case the asymmetry problem was created by UL congestion, the DL throughput may instantly start degrading without the CoM; therefore, the shaper should continuously work towards holding back the UL data throughput but never has to work in the opposite direction, i.e., reducing the DL throughput.

The shaper may be implemented by maintaining $N_D$ and $N_A$ as two counters, which are initialized to one at the detection of the TCP asymmetry problem, i.e., when the CoM 700 is triggered by the EC. After that, $N_D$ is incremented each time a DL data segment is received and transmitted by the TcpAsym entity. If incrementing $N_D$ has increased the $N_D / N_A$ ratio above T, the first ACK is released from the beginning of the buffer 710 and $N_A$ is also incremented. This mechanism ensures that by enforcing the $N_D / N_A$ ratio, the target throughput ratio is also maintained accurately during the periods of two-way TCP traffic. The initialization of the counters to one instead of zero may avoid numerical instability problems (e.g., division by zero) without additional checks. The $N_D$ and $N_A$ counters are maintained by the shaper itself (instead of the MC 500) since the counters are a part of the operation of the shaper.

The shaping is continued while there is congestion detected in the UL and there is data scheduled for transmission in DL. Otherwise, shaping is gradually terminated and the ACKs 54 buffered by the shaper are released. The shaper may release the ACKs 54 gradually from the buffer 710 to avoid a large burst to be sent by the UL TCP sender. This can result in invalid RTT measurements at the UL TCP sender. One possibility is to release a single DL ACK when the two-way traffic switches to one-way to ensure that the UL sender can transmit a data segment if there is data available. At the reception of each subsequent DL ACK, the shaper still en-queues the ACK to the end of the buffer 710 (to avoid ACK reordering) but releases the first two ACKs 54 from the buffer. This mechanism ensures that ACKs 54 are released at an exponentially increasing rate, similarly to the slow start phase of a starting TCP connection. When the ACK buffer 710 empties, the subsequently received DL ACKs 54 are not buffered any more.

The implementation may be suitable for the case where the TCP receivers send a separate ACK to each received TCP data segment (no delayed ACKs 54). However, in certain TCP stack configurations, the delayed ACK mechanism is enabled. The delayed ACK mechanism results in sending an ACK only to every second received data segment in general. This means that counting the ACKs 54 and data segments 52 in the downlink does not accurately reflect the amount of data that has been transmitted in the UL and DL respectively (note that ACKs 54 sent in DL correspond to data to be transmitted in the UL). Another issue with packet counting is that not all data segments 52 carry the same amount of data (the payload of full sized segments is MSS bytes but it may be also less if the application data was segmented differently at the TCP sender).

As an alternative to the above packet counting implementation, an alternative is discussed, referred to as one-way appropriate byte counting. Appropriate byte counting means that the $N_D$ and $N_A$ counters are measured in bytes instead of segments; one-way refers to the property that still only DL segments need to be monitored. In case a DL data segment arrives, the $N_D$ counter is increased by the size of the segment (available from the TCP/IP protocol headers). In case a DL ACK is received, the NA counter is incremented by the amount of data that the ACK acknowledges. Since this information is not explicitly indicated in the TCP ACK header, an additional per-flow state variable may be maintained by the MC 500 of the TcpAsym entity; this variable holds the highest ACK number in the corresponding flow (note that this may be maintained separately in DL and UL). In case a DL ACK is received, the difference of the ACK number in the received ACK segment and the stored highest ACK is computed; let $A_{DIFF}$ denote the resulting difference. Since ACK numbers increase monotonically, this difference cannot be negative; the difference is either positive, which indicates that the ACK acknowledges new data, or the difference is zero, which indicates that the ACK is a duplicate ACK. In the former case (acknowledging new data), $A_{DIFF}$ directly gives the amount of data that the ACK acknowledges and DA should be incremented by ADIFF. In the latter case (duplicate ACK), $A_{DIFF}$ is zero; however, the $N_A$ still needs to be incremented as a duplicate ACK also means the reception of a data segment at the TCP receiver; it just indicates that the received segment was out-of-order. If the TCP is SACK (selective acknowledgement) enabled, the SACK block of the ACK can be used to precisely obtain the amount of received out-of-order data and used to increment $N_A$ accordingly. However, without SACK, the amount of out-of-order data cannot be followed and the implementation can only assume that a full sized segment was received (which is reasonable as there were subsequent segments to the lost one) and increment $N_A$ by one MSS. The MSS of the connection can either be detected by the measurement component based on the size of the largest data segment received so far or a reasonable pre-configured value can also be used that is likely to be observed in a common network (e.g., in today's network a 1410 byte segment is typical).

An alternative implementation of the one-way appropriate byte counting is the two-way byte counting, which gives up the counting of DL ACKs 54 in favour of counting the UL data directly, requiring both DL and UL counting. Consequently, the $N_A$ counter is incremented when a data segment is received in UL by the exact size of the UL data segment (available in the TCP header). This mechanism makes it possible to keep track of the amount of data transferred in both UL and DL regardless of whether the TCP receivers are using delayed ACKs 54 and also without having to keep track of the highest received ACK in the per-flow state of each connection. Note that counting the bytes based on the size of the TCP data segments 52 also counts retransmissions; however, this is not a problem as the retransmitted segments are no different from new data segments 52 as far as the TCP asymmetry problem is concerned. The implementation of the two-way appropriate byte counting may be possible without additional CoM 700 specific measurements to be performed by the MC 500.

In case of appropriate byte counting, the target throughput ratio may be maintained by the DL ACK shaper in the same way as with the packet based counting, i.e., by ensuring that $N_D / N_A \approx T$ during two-way TCP traffic. When the two-way traffic stops, the value of the counters may not be relevant anymore and they will be reset to one next time at the beginning of the two-way traffic, when the EC 600 triggers the shaper.

Note that the DL ACK shaper may use a single buffer 710 for all TCP flows, i.e., the ACKs 54 of the flows are multiplexed (in the order of their arrival) in the same buffer; therefore, there is no need for per-flow buffering and queuing. Also, buffering the ACKs 54 does not require storing large amount of data due to the relatively small size of the ACKs 54; roughly, storing the ACKs 54 corresponding to 1 MB of data requires only 25 KB of storage even if all data segments 52 are ACKed individually. Moreover, the ACK buffer 710 may be implemented jointly with the buffers already present in one of the protocol layers in the eNB (e.g., the PDCP/RLC (packet data convergence protocol/radio link control) buffers), thereby no additional resources may be needed in an eNB containing the implementation of the TcpAsym entity and the per-bearer resource limitations (e.g., buffer size) can be enforced consistently even in the presence of this entity.

The DL ACK shaper may not increase the risk of buffer overflows; on the contrary, since it decreases the amount of data that is sent in the UL direction and consequently the ACKs 54 that are sent in the DL within a given time interval, the amount of buffering needed due to the shaping may be less than what would be needed otherwise.

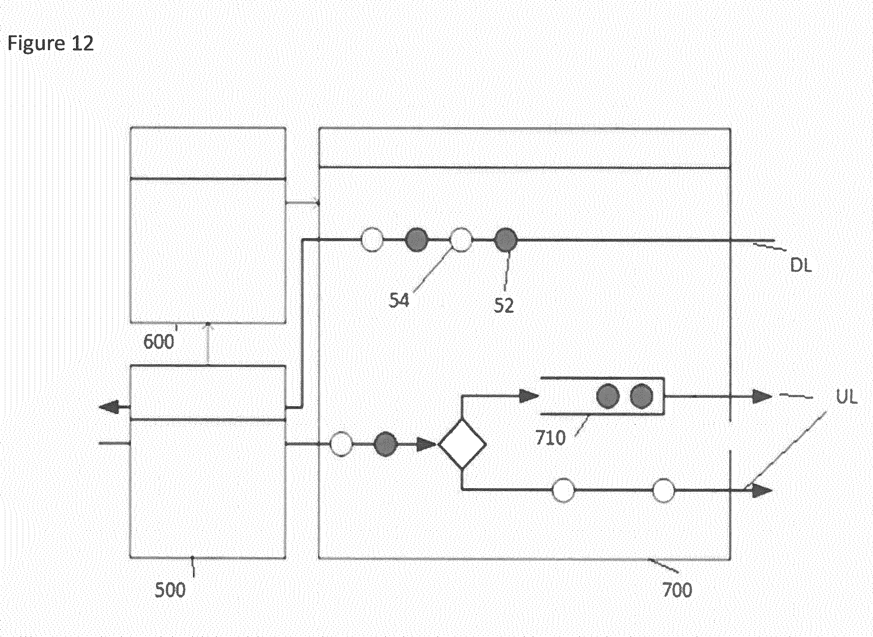

Alternatively, as shown in figure 12, the CoM 700 may shape the data in the congested direction. The architecture and operation of this mechanism is analogous to that of the DL ACK shaper; the shaper also controls the TCP connections in one direction (this time in UL) only. The difference from the ACK shaper is that in order to limit the throughput of the UL TCP senders, the mechanism delays the UL data segments 52 instead of the DL ACKs 54. The implementation of the rate matching may be based on counters similar to the case of the DL ACK shaper, with the difference that in this case $N_D$ should count the number of UL data segments 52 and $N_A$ counts the number of UL ACKs 54 (which indirectly corresponds to the amount of DL data). Consequently, the goal of the shaper may be to ensure that NA / ND $\approx$ T. The one-way or two-way appropriate byte counting alternatives can be applied for this mechanism in the same way as in case of the DL ACK shaper.

The TCP may not be the only transport layer protocol used for data transmission, therefore the TcpAsym entity needs to be able to handle cases when different types of traffic (e.g., UDP (user datagram protocol) based streaming) is sent in the opposite direction of TCP traffic. The MC 500 measures the throughput of non-TCP flows if they are present. Based on the possibilities of the non-TCP based technology, these sources may be put under the management of the TcpAsym entity by exploiting well known protocol specific feedback mechanisms to reduce their data rate. In case of non-adaptive sources, possibilities are to either discard the corresponding packets to actually kill the traffic, or (since their rate cannot be controlled) measure and subtract their throughput from the total available DL/UL bandwidth and recalculate the target DL/UL throughput ratio based on the bandwidth that remains accessible to the TCP sources. Note that since the majority of the data traffic is sent over the TCP, the above described heterogeneous traffic mixes are not common. These cases can be handled according to policies, e.g., whether TCP download should be actively promoted in case there is a simultaneous uplink UDP streaming (by trying to decrease the sending rate of the streaming) or no actions should be performed at all.

It is noted that whilst embodiments have been described in relation to LTE, similar principles may be applied to any other communication system or to further developments with LTE. Therefore, although certain embodiments are described above by way of example with reference to certain exemplifying architectures for wireless networks, technologies and standards, embodiments may be applied to any other suitable forms of communication systems than those illustrated and described herein. Embodiments may be used in wired networks.

The required data processing apparatus and functions of a base station apparatus, a communication device, the TcpAsym entity and any other appropriate apparatus may be provided by means of one or more data processors. The described functions may be provided by one or more processors or by an integrated processor. The data processors may be of any type suitable to the local technical environment, and may include one or more of general purpose computers, special purpose computers, microprocessors, digital signal processors (DSPs), application specific integrated circuits (ASIC), gate level circuits and processors based on multi core processor architecture, as non-limiting examples. The data processing may be distributed across several data processing modules. A data processor may be provided by means of, for example, at least one chip. Appropriate memory capacity can also be provided in the relevant devices. The memory or memories may be of any type suitable to the local technical environment and may be implemented using any suitable data storage technology, such as semiconductor based memory devices, magnetic memory devices and systems, optical memory devices and systems, fixed memory and removable memory. In general, the various embodiments may be implemented in hardware or special purpose circuits, software, logic or any combination thereof.

Some aspects of the invention may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof. The software may be stored on such physical media as memory chips, or memory blocks implemented within the processor, magnetic media such as hard disk or floppy disks, and optical media such as for example DVD and the data variants thereof, CD.

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention as defined in the appended claims.

**Claims**

1. A method comprising:

   determining that data throughput degradation is present in one of the uplink and downlink directions, and congestion is present in the other of the uplink and downlink directions, the uplink and downlink directions having different capacities, wherein determining that throughput degradation is present comprises comparing a ratio of the downlink and uplink throughput data to a target ratio; and
   reducing data throughput in the other of the uplink and downlink directions upon detecting throughput degradation and congestion.

2. The method of claim 1, comprising measuring data flow in the uplink and downlink directions.

3. The method of claim 2, wherein the data flow comprises data segments, the method comprising measuring acknowledgment of data segments.

4. The method of claim any preceding claim, wherein data is transferred using the Transmission Control Protocol.

5. The method of any of claims 1 to 4, wherein reducing data throughput comprises decreasing an advertised window.

6. The method of claims 1 to 4, wherein reducing data throughput comprises controlling a rate of acknowledgements in the non-congested direction.

7. The method of claims 1 to 4, wherein reducing data throughput comprises controlling a rate data segments in the congested direction.

8. The method of any of claims 1 to 7, wherein the target ratio is dependent on the capacity in uplink and downlink.

9. The method of claim 8, wherein the capacity is preconfigured.

10. The method of claim 8, wherein the capacity is based on detecting capacity of previous throughput measurements.

11. The method of any preceding claim, wherein the link is an asymmetric air interface link.

12. The method of any preceding claim, wherein the link is an asymmetric transport link.

13. An apparatus, said apparatus comprising at least one processor and at least one memory including computer code for one or more programs, the at least one memory and the computer code configured, with the at least one processor, to cause the apparatus at least to:

    determine that data throughput degradation is present in one of the uplink and downlink directions, and congestion is present in the other of the uplink and downlink directions, the uplink and downlink directions having different capacities, wherein determining that throughput degradation is present comprises comparing a ratio of the downlink and uplink throughput data to a target ratio; and
    reduce data throughput in the other of the uplink and downlink directions upon detecting throughput degradation and congestion.

14. An apparatus as claimed in claim 13, wherein the at least one memory and the computer code are configured, with the at least one processor, to measure data flow in the uplink and downlink directions.

15. An apparatus as claimed in claim 13 or 14, wherein the data flow comprises data segments, and the at least one memory and the computer code are configured, with the at least one processor, to count acknowledgment of data segments.

16. An apparatus as claimed in any of claims 13 to 15, wherein the data is transferred using the Transmission Control Protocol.

17. An apparatus as claimed in any of claims 13 to 16, wherein the at least one memory and the computer code are configured, with the at least one processor, to change an advertised window.

18. An apparatus as claimed in any of claims 13 to 16, wherein the at least one memory and the computer code are configured, with the at least one processor, to control a rate of acknowledgements in the non-congested direction.

19. An apparatus as claimed in any of claims 13 to 16, wherein the at least one memory and the computer code are configured, with the at least one processor, to control a rate of data in the congested direction.

20. An apparatus as claimed in any of claims 13 to 19, wherein the target ratio is dependent on the capacity in uplink and downlink.

21. A computer program comprising computer executable instructions which when run are configured to perform the method of any of claims 1 to 12.

**Patentansprüche**

1. Verfahren, umfassend:

   Bestimmen, dass eine Datendurchsatzdegradierung in einer der Uplink- und Downlink-Richtungen vorliegt und eine Überlastung in der anderen der Uplink- und Downlink-Richtungen vorliegt, wobei die Uplink- und Downlink-Richtungen unterschiedliche Kapazitäten aufweisen, wobei das Bestimmen, dass eine Durchsatzdegradierung vorliegt, das Vergleichen eines Verhältnisses der Downlink- und Uplink-Durchsatzdaten mit einem Soll-Verhältnis umfasst; und
   Reduzieren des Datendurchsatzes in der anderen der Uplink- und Downlink-Richtungen bei der Erfassung von Durchsatzdegradierung und Überlastung.

2. Verfahren nach Anspruch 1, umfassend das Messen des Datenflusses in der Uplink- und Downlink-Richtung.

3. Verfahren nach Anspruch 2, wobei der Datenfluss Datensegmente umfasst, wobei das Verfahren das Messen der Bestätigung von Datensegmenten umfasst.

4. Verfahren nach einem der vorhergehenden Ansprüche, wobei Daten unter Verwendung des "Transmission Control Protocol" übertragen werden.

5. Verfahren nach einem der Ansprüche 1 bis 4, wobei das Reduzieren des Datendurchsatzes das Verringern eines angekündigten Fensters umfasst.

6. Verfahren nach einem der Ansprüche 1 bis 4, wobei das Reduzieren des Datendurchsatzes das Steuern einer Rate von Bestätigungen in der nicht überlasteten Richtung umfasst.

7. Verfahren nach den Ansprüchen 1 bis 4, wobei das Reduzieren des Datendurchsatzes das Steuern einer Rate von Datensegmenten in der überlasteten Richtung umfasst.

8. Verfahren nach einem der Ansprüche 1 bis 7, wobei das Soll-Verhältnis von der Kapazität in Uplink und Downlink abhängig ist.

9. Verfahren nach Anspruch 8, wobei die Kapazität vorab ausgelegt ist.

10. Verfahren nach Anspruch 8, wobei die Kapazität auf dem Erfassen der Kapazität früherer Durchsatzmessungen basiert.

11. Verfahren nach einem der vorhergehenden Ansprüche, wobei die Verbindung eine asymmetrische Luftschnittstellenverbindung ist.

12. Verfahren nach einem der vorhergehenden Ansprüche, wobei die Verbindung eine asymmetrische Transportverbindung ist.

**13.** Vorrichtung, wobei die Vorrichtung mindestens einen Prozessor und mindestens einen Speicher mit Computercode für ein oder mehrere Programme umfasst, wobei der mindestens eine Speicher und der Computercode mit dem mindestens einen Prozessor ausgelegt sind, um die Vorrichtung zu veranlassen, mindestens um:

zu bestimmen, dass eine Datendurchsatzdegradierung in einer der Uplink- und Downlink-Richtungen vorliegt und eine Überlastung in der anderen der Uplink- und Downlink-Richtungen vorliegt, wobei die Uplink- und Downlink-Richtungen unterschiedliche Kapazitäten aufweisen, wobei das Bestimmen, dass eine Durchsatzdegradierung vorliegt, das Vergleichen eines Verhältnisses der Downlink- und Uplink-Durchsatzdaten mit einem Soll-Verhältnis umfasst; und

den Datendurchsatz in der anderen der Uplink- und Downlink-Richtungen bei der Erfassung von Durchsatzdegradierung und Überlastung zu reduzieren.

**14.** Vorrichtung nach Anspruch 13, wobei der mindestens eine Speicher und der Computercode mit dem mindestens einen Prozessor ausgelegt sind, um den Datenfluss in der Uplink- und Downlink-Richtung zu messen.

**15.** Vorrichtung nach Anspruch 13 oder 14, wobei der Datenfluss Datensegmente umfasst, und der mindestens eine Speicher und der Computercode mit dem mindestens einen Prozessor ausgelegt ist, um die Bestätigung von Datensegmenten zu zählen.

**16.** Vorrichtung nach einem der Ansprüche 13 bis 15, wobei die Daten unter Verwendung des "Transmission Control Protocol" übertragen werden.

**17.** Vorrichtung nach einem der Ansprüche 13 bis 16, wobei der mindestens eine Speicher und der Computercode mit dem mindestens einen Prozessor ausgelegt sind, um ein angekündigtes Fenster zu ändern.

**18.** Vorrichtung nach einem der Ansprüche 13 bis 16, wobei der mindestens eine Speicher und der Computercode mit dem mindestens einen Prozessor ausgelegt sind, um eine Rate von Bestätigungen in der nicht überlasteten Richtung zu steuern.

**19.** Vorrichtung nach einem der Ansprüche 13 bis 16, wobei der mindestens eine Speicher und der Computercode mit dem mindestens einen Prozessor ausgelegt sind, um eine Rate von Daten in der überlasteten Richtung zu steuern.

**20.** Vorrichtung nach einem der Ansprüche 13 bis 19, wobei das Soll-Verhältnis von der Kapazität in Uplink und Downlink abhängig ist.

**21.** Computerprogramm, umfassend computerausführbare Anweisungen, die bei Ausführung dazu ausgelegt sind, das Verfahren nach einem der Ansprüche 1 bis 12 durchzuführen.

**Revendications**

**1.** Procédé comprenant :

la détermination qu'une dégradation du débit de données a lieu dans une direction parmi la direction de liaison montante et la direction de liaison descendante, et qu'une congestion se produit dans l'autre direction parmi la direction de liaison montante et la direction de liaison descendante, les directions de liaison montante et de liaison descendante ayant des capacités différentes, où la détermination qu'une dégradation du débit a lieu comprend la comparaison d'un rapport des données du débit des liaisons descendante et montante à un rapport cible ; et

la réduction du débit de données dans l'autre direction parmi la direction de liaison montante et la direction de liaison descendante lors de la détection d'une dégradation et d'une congestion du débit.

**2.** Procédé selon la revendication 1, comprenant la mesure du flux de données dans les directions de liaison montante et de liaison descendante.

**3.** Procédé selon la revendication 2, dans lequel le flux de données comprend des segments de données, le procédé comprenant la mesure d'accusés de réception de segments de données.

**4.** Procédé selon l'une quelconque des revendications précédentes, dans lequel les données sont transférées au moyen du protocole de contrôle de transmission.

**5.** Procédé selon l'une quelconque des revendications 1 à 4, dans lequel la réduction du débit de données comprend la diminution d'une fenêtre annoncée.

**6.** Procédé selon les revendications 1 à 4, dans lequel la réduction du débit de données comprend de contrôler un débit d'accusés de réception dans la direction non congestionnée.

**7.** Procédé selon les revendications 1 à 4, dans lequel la réduction du débit de données comprend de contrôler un débit de segments de données dans la direction congestionnée.

**8.** Procédé selon l'une quelconque des revendications 1 à 7, dans lequel le rapport cible dépend de la capacité en liaison montante et en liaison descendante.

**9.** Procédé selon la revendication 8, dans lequel la capacité est préconfigurée.

**10.** Procédé selon la revendication 8, dans lequel la capacité est basée sur la détection de capacité des mesures de débit précédentes.

**11.** Procédé selon l'une quelconque des revendications précédentes, dans lequel la liaison est une liaison asymétrique d'interface radio.

**12.** Procédé selon l'une quelconque des revendications précédentes, dans lequel la liaison est une liaison de transport asymétrique.

**13.** Appareil, ledit appareil comprenant au moins un processeur et au moins une mémoire comprenant un code informatique pour un ou plusieurs programmes, l'au moins une mémoire et le code informatique étant configurés, avec l'au moins un processeur, pour amener l'appareil à au moins :

déterminer qu'une dégradation du débit de données a lieu dans une direction parmi la direction de liaison montante et la direction de liaison descendante, et qu'une congestion se produit dans l'autre direction parmi la direction de liaison montante et la direction de liaison descendante, les directions de liaison montante et de liaison descendante ayant des capacités différentes, où la détermination qu'une dégradation du débit a lieu comprend la comparaison d'un rapport des données du débit des liaisons descendante et montante à un rapport cible ; et
réduire le débit de données dans l'autre direction parmi la direction de liaison montante et la direction de liaison descendante lors de la détection d'une dégradation et d'une congestion du débit.

**14.** Appareil tel que revendiqué dans la revendication 13, dans lequel l'au moins une mémoire et le code informatique sont configurés, avec l'au moins un processeur, pour mesurer le flux de données dans les directions de liaison montante et de liaison descendante.

**15.** Appareil tel que revendiqué dans la revendication 13 ou la revendication 14, dans lequel le flux de données comprend des segments de données, et l'au moins une mémoire et le code informatique sont configurés, avec l'au moins un processeur, pour compter des accusés de réception de segments de données.

**16.** Appareil tel que revendiqué dans l'une quelconque des revendications 13 à 15, dans lequel les données sont transférées au moyen du protocole de contrôle de transmission.

**17.** Appareil tel que revendiqué dans l'une quelconque des revendications 13 à 16, dans lequel l'au moins une mémoire et le code informatique sont configurés, avec l'au moins un processeur, pour changer une fenêtre annoncée.

**18.** Appareil tel que revendiqué dans l'une quelconque des revendications 13 à 16, dans lequel l'au moins une mémoire et le code informatique sont configurés, avec l'au moins un processeur, pour contrôler un débit d'accusés de réception dans la direction non congestionnée.

**19.** Appareil tel que revendiqué dans l'une quelconque des revendications 13 à 16, dans lequel l'au moins une mémoire et le code informatique sont configurés, avec l'au moins un processeur, pour contrôler un débit de données dans la direction congestionnée.

20. Appareil tel que revendiqué dans l'une quelconque des revendications 13 à 19, dans lequel le rapport cible dépend de la capacité en liaison montante et en liaison descendante.

21. Programme informatique comprenant des instructions exécutables par ordinateur qui, lorsqu'elles sont exécutées, sont configurées pour exécuter le procédé de l'une quelconque des revendications 1 à 12.

Figure 1

Figure 2

200
208
205
203
201
204
202

207  206

Figure 3

300
304
303
302
301

Figure 4

two-way TCP traffic

bottleneck radio with asymmetry

upload / download

10

20

30

40

EP 2 890 179 B1

20

Figure 5

Figure 6

EP 2 890 179 B1

two-way TCP traffic

12

14

20

bottleneck link
with asymmetry

30

upload

download

42

44

Figure 7

Figure 8

TCP and non-TCP data
connections in UL/DL

Figure 9

```
┌─────────────────┐
│ Detect two-way  │
│ TCP flow        │
└─────────────────┘
         │
         ▼
┌─────────────────┐
│ Measure data    │
│ throughput of the│
│ flow in both    │
│ directions      │
└─────────────────┘
         │
         ▼
┌─────────────────┐
│ Detect data     │
│ throughput      │
│ degradation in  │
│ one direction and│
│ congestion in the│
│ opposite direction│
└─────────────────┘
         │
         ▼
┌─────────────────┐
│ Reduce data     │
│ throughput in   │
│ congested       │
│ direction       │
└─────────────────┘
```

Figure 10

Figure 11

Figure 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0219654 A

- US 20130194952 A

**Non-patent literature cited in the description**

- **VANGALA S et al.** The TCP SACK-aware snoop protocol for TCP over wireless networks. *VEHICULAR TECHNOLOGY CONFERENCE, 2003,* 06 October 2003, vol. 4, 2624-2628